(19) 

Europäisches
Patentamt

European
Patent Office

Office européen
des brevets

(11) **EP 4 694 358 A1**

(12) **EUROPEAN PATENT APPLICATION**
published in accordance with Art. 153(4) EPC

(43) Date of publication:
**11.02.2026 Bulletin 2026/07**

(21) Application number: **24732159.9**

(22) Date of filing: **05.04.2024**

(51) International Patent Classification (IPC):
*H04W 48/08* (2009.01)   *H04W 74/00* (2009.01)
*H04W 76/11* (2018.01)   *H04W 4/70* (2018.01)
*H04W 88/02* (2009.01)

(52) Cooperative Patent Classification (CPC):
**H04W 4/70; H04W 48/08; H04W 74/00;**
**H04W 76/11; H04W 88/02**

(86) International application number:
**PCT/KR2024/004506**

(87) International publication number:
**WO 2024/210611 (10.10.2024 Gazette 2024/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.04.2023 US 202363457763 P**

(71) Applicant: **LG Electronics Inc.**
**Seoul 07336 (KR)**

(72) Inventors:
• **LEE, Youngdae**
 **Seoul 06772 (KR)**
• **AHN, Seungjin**
 **Seoul 06772 (KR)**
• **KIM, Jaehyung**
 **Seoul 06772 (KR)**
• **YANG, Suckchel**
 **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING INITIAL ACCESS IN WIRELESS COMMUNICATION SYSTEM**

(57)    A method and apparatus for performing communication in a wireless communication system are disclosed. A method performed by a user equipment (UE) according to an embodiment of the present disclosure may include receiving system information related to a first cell from a base station; receiving a random access response (RAR) based on a random access channel (RACH) preamble from the base station; and based on the RAR and the system information, transmitting a physical uplink shared channel (PUSCH) including a medium access control (MAC) subheader of a MAC protocol data unit (PDU) to the base station, and based on whether the system information includes first information related to a first function-based UE, a first value of a logical channel identifier (LCID) field of the MAC subheader is related to second information about a second function-based UE or is related to third information about a first function-based UE.

FIG.7

RECEIVING SYSTEM INFORMATION RELATED TO THE FIRST CELL FROM THE BASE STATION — S710

RECEIVING A RAR BASED ON A RACH PREAMBLE FROM THE BASE STATION — S720

TRANSMITTING A PUSCH INCLUDING A MAC SUBHEADER OF MAC PDU TO THE BASE STATION — S730

Processed by Luminess, 75001 PARIS (FR)

## Description

[TECHNICAL FIELD]

The present disclosure relates to a wireless communication system, and more specifically to a method and device for performing initial access in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing initial access in a wireless communication system.

The technical problem of the present disclosure is to provide a method and device for indicating different information through a logical channel identifier (LCID) field set to the same value based on system information.

The technical problems to be achieved by the present disclosure are not limited to the above-described technical objects, and other technical problems which are not described herein will be clearly understood by those skilled in the pertinent art from the following description.

[Technical Solution]

According to an embodiment of the present disclosure, a method performed by a user equipment (UE) in a wireless communication system may include receiving system information related to a first cell from a base station; receiving a random access response (RAR) based on a random access channel (RACH) preamble from the base station; and based on the RAR and the system information, transmitting a physical uplink shared channel (PUSCH) including a medium access control (MAC) subheader of a MAC protocol data unit (PDU) to the base station, and based on whether the system information includes first information related to a first function-based UE, a first value of a logical channel identifier (LCID) field of the MAC subheader may be related to second information about a second function-based UE or related to third information about a first function-based UE.

According to an embodiment of the present disclosure, a method performed by a base station in a wireless communication system may include transmitting system information related to a first cell to a user equipment (UE); transmitting a random access response (RAR) based on a random access channel (RACH) preamble to the UE; and based on the RAR and the system information, receiving a physical uplink shared channel (PUSCH) including a medium access control (MAC) subheader of a MAC protocol data unit (PDU) from the UE, and based on whether the system information includes first information related to a first function-based UE, a first value of a logical channel identifier (LCID) field of the MAC subheader may be related to second information about a second function-based UE or related to third information about a first function-based UE.

[Technical Effects]

According to various embodiments of the present disclosure, a method and device for performing initial connection in a wireless communication system may be provided.

According to various embodiments of the present disclosure, a method and device for indicating different information through an LCID field set to the same value based on system information may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing a process in which a UE performs communication according to an embodiment of the present disclosure.
FIG. 8 is a diagram for describing a process in which a base station performs communication according to an embodiment of the present disclosure.
FIG. 9 is a diagram for describing the signaling procedure of a base station and a UE according to an embodiment of the present disclosure.
FIG. 10 illustrates a block diagram of a wireless communication device according to an embodiment of the present disclosure.

[DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel

- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

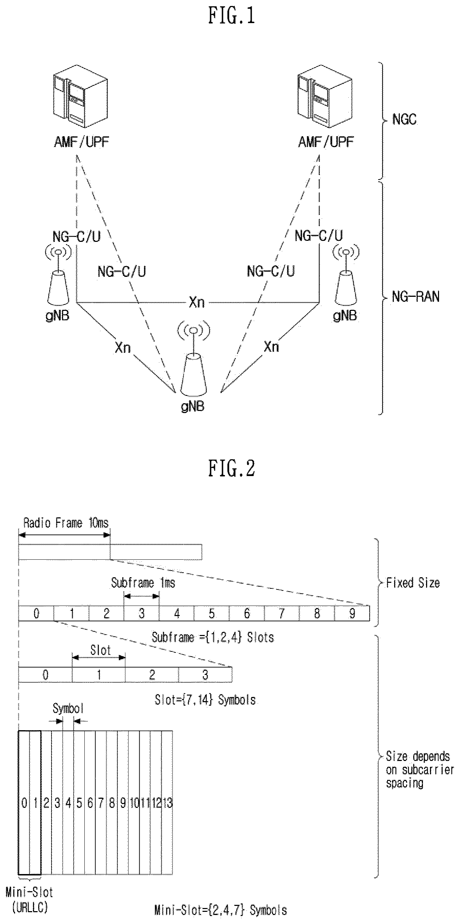

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |

(continued)

| μ | Δf=$2^\mu \cdot 15$ [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slol}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

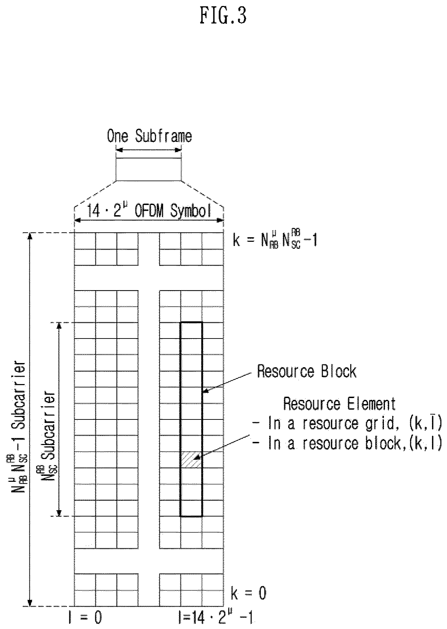

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

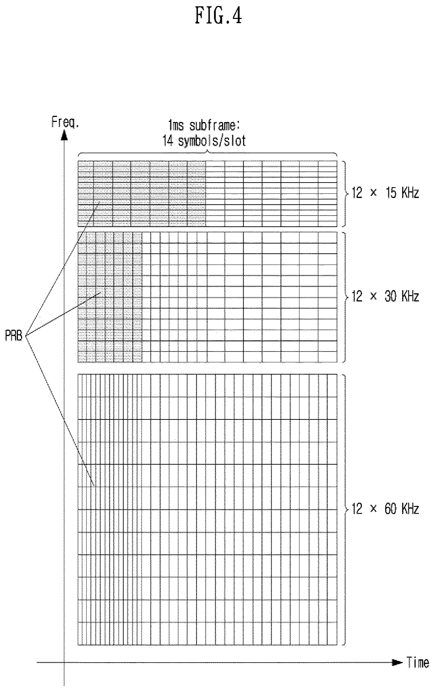

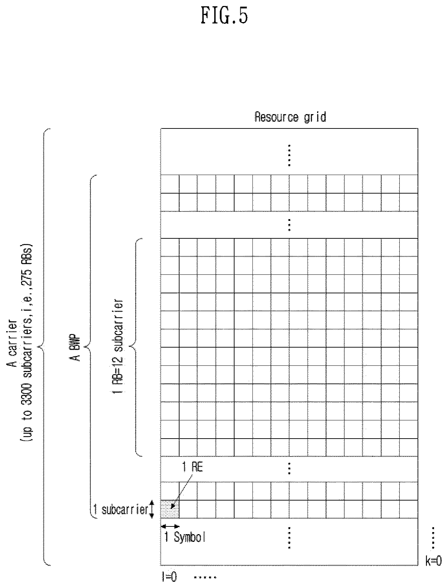

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

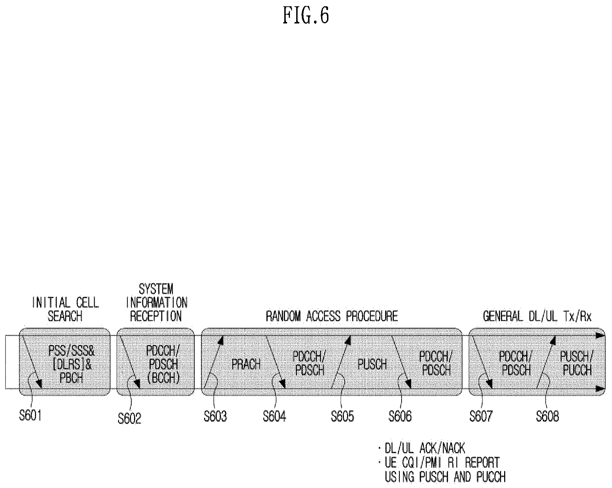

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|------------|-----|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>Initial access procedure for RedCap (reduced capability) UE</u>

Recently, the importance and interest in the use case area spanning not only mMTC, eMBB, and URLLC, but also mMTC and eMBB or mMTC and URLLC has been increasing. As an example, use cases spanning mMTC and eMBB or mMTC and URLLC may include connected industries, smart cities, and wearable devices.

In order to efficiently respond to issues such as UE cost/complexity and power consumption when the above-described use cases are used in a wireless communication system, a new type of UE distinct from the existing (NR) UE was introduced. The new type of UE is referred to as a RedCap UE or/and an enhanced RedCap (hereinafter, eRedCap) UE. (e) RedCap UEs have the characteristics of being cheaper and consuming less power than non-RedCap UEs.

The maximum bandwidth and number of Rx/Tx antennas/branches supported by the (e)RedCap UE may be reduced, and thus UE processing time and processing capacity may be relaxed. And, (e)RedCap UE complexity can be reduced by using half-duplex-FDD. Additionally, the (e)RedCap UE may use extended DRX (discontinuous reception) for RRC_inactive or RRC_idle, and power may be conserved as the terminal performs relaxed radio resource management (RRM) for a stationary device.

Among the use cases to which (e)RedCap UEs are applied, in the case of connected industries, sensors and actuators may be connected to the network and core of a wireless communication system (e.g., NR), and a large-scale Industrial Wireless Sensor Network (IWSN) may be utilized. Additionally, very demanding URLLC services can be supported as well as relatively low-cost services that require small device form factors with battery life of several years. Requirements for those services may be higher than Low Power Wide Area (LPWA) (i.e. LTE-M/NB-IOT) but lower than URLCC and eMBB. In an environment where connected industries are applied, pressure sensors, humidity sensors, thermometers, motion sensors, accelerometers, actuators, etc. may be connected to each other.

Among the use cases to which (e)RedCap UEs are applied, in the case of smart cities, data collection and processing can be performed to more efficiently monitor and control city resources and provide services to city residents. Additionally, surveillance camera deployments used in smart cities can also be deployed in factories and industrial sites.

Among the use cases to which (e)RedCap UEs are applied, wearable devices may include smart watches, rings, eHealth-related devices, medical monitoring devices, etc. Since the size of the wearable device is small, it may require low power consumption.

(e) RedCap UEs may have lower transmission and reception performance compared to non-RedCap terminals. The main cause is a decrease in frequency diversity performance due to a decrease in terminal bandwidth. As the supported UE bandwidth decreases, the decrease in performance becomes greater.

Meanwhile, when considering wearable devices and massive wireless sensors, which are the main use cases of (e)RedCap terminals, massive connections must be supported through a narrow bandwidth, so problems related to traffic congestion may occur.

Hereinafter, in order to solve the above-mentioned problems, a method for supporting UE frequency hopping (FH) and traffic offloading (TO) and an initial access method of multiple (e)RedCap UEs will be described.

Meanwhile, in the present disclosure, "()" can be interpreted both as excluding the content in () and including the content in parentheses. Additionally, "/" may mean including all of the content (and) separated by / or including only part of the separated content (or).

And, the present disclosure may support multiple types of (e)RedCap UEs. As an example, Rel-17 (R17) RedCap UEs supporting 20 MHz BWP and Rel-18 (R18) RedCap UEs supporting 5 MHz BWP (or 5 MHz sub-BWP or 5 MHz BW location) may be supported.

R18 RedCap UEs may be divided into option BW 1, option BW 2, and option BW 3. The R18 RedCap UE with option BW 1 may support 5 MHz of RF and BaseBand (BB) bandwidth in UL and DL. The R18 RedCap UE with Option BW 2 may support 5 MHz BB bandwidth for all signals and channels with 20 MHz RF bandwidth in UL and DL. An R18 RedCap UE with option BW 3 may support 5MHz BB bandwidth only for PDSCH (both unicast and broadcast) and PUSCH with 20MHz RF bandwidth for UL and DL. For other physical channels and signals, R18 RedCap UEs with option BW 3 may use BWP up to 20 MHz UE RF + BB bandwidth.

And, continuing to describing the present disclosure, Rel-18 PDSCH or DCI may mean PDSCH or DCI for R18 RedCap UE. Rel-17 PDSCH, legacy PDSCH, or pre-Rel-18 PDSCH may mean a PDSCH for an R17 RedCap UE or a non-(e)RedCap UE regardless of release. Rel-17 DCI, legacy DCI, or pre-Rel-18 DCI may refer to an R17 RedCap UE or a DCI for a non-RedCap UE regardless of release.

In the present disclosure, the BWP for the R18 RedCap UE may be replaced with a sub-BWP or BW location, and its size may be 5 MHz or less.

Additionally, LCID may mean the LCID itself or an LCID field, and the LCID value may mean a value/codepoint/index, etc. indicated through the LCID field.

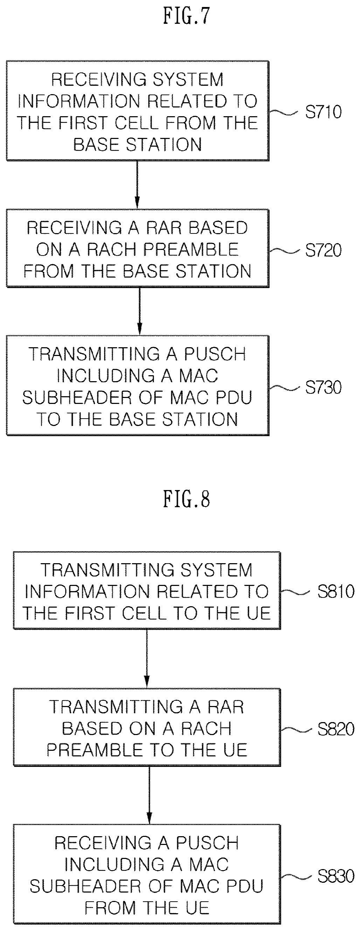

FIG. 7 is a diagram for describing a process in which a UE performs communication according to an embodiment of the present disclosure.

The UE in FIGS. 7 and 8 may refer to a first function (or capability)-based UE (e.g., an eRedCap UE (i.e., R18 RedCap terminal) supporting 5 MHz BWP). However, this is only an Embodiment, the operations/procedures described with reference to FIGS. 7 and 8 may also be applied to a UE based on a third function (or capability) (e.g., a RedCap UE that supports 20 MHz BWP (i.e., R17 RedCap UE)) or a UE based on a second function (or capability) (e.g., a general UE (i.e., non-RedCap UE)). That is, the first function (or capability)-based UE may correspond to an eRedCap UE, and the second function (or capability)-based UE may correspond to a general UE. And, the third function (or capability)-based UE may correspond to the R17 RedCap UE.

Here, the first function (or capability) or/and the third function (or capability) may include a reduced function (or capability) than the second function (or capability). That is, the second function may include various functions supported through the first function and the third function.

And, in FIGS. 7 and 8, the base station may refer to a general term for objects that transmit and receive data with a terminal. For example, the base station may be a concept that includes one or more Transmission Points (TPs), one or more Transmission and Reception Points (TRPs), etc. Additionally, the TP and/or TRP may include a base station panel, a transmission and reception unit, etc.

And, in FIGS. 7 and 8, the base station (or network side) may be one base station including multiple TRPs, or may be one cell including multiple TRPs. Alternatively, the network side may include a plurality of remote radio heads (RRH)/remote radio units (RRU).

The UE may receive system information related to the first cell from the base station (S710).

System information may be divided into a master information block (MIB) and a plurality of system information blocks (SIB). System information (SI) other than MIB may be referred to as RMSI (Remaining Minimum System Information).

MIB may include information/parameters for monitoring of PDCCH scheduling PDSCH carrying SIB1 (System-InformationBlock1) and may be transmitted by the base station through PBCH of SSB. For example, the UE may check whether a Control Resource Set (CORESET) for the Type0-PDCCH common search space exists based on the MIB. Type0-PDCCH common search space may be a type of PDCCH search space and may be used to transmit PDCCH for scheduling SI messages. If a Type0-PDCCH common search space exists, the UE may determine (i) a plurality of contiguous resource blocks and one or more consecutive symbols constituting CORESET and (ii) a PDCCH occasion (e.g., time domain location for PDCCH reception), based on information in the MIB (e.g. pdcch-ConfigSIB1). When a Type0-PDCCH common search space does not exist, pdcch-ConfigSIB1 provides information about the frequency location where SSB/SIB1 exists and the frequency range where SSB/SIB1 does not exist.

SIB1 may include information related to the availability and scheduling (e.g., transmission period, SI-window size) of the remaining SIBs (hereinafter SIBx, x is an integer of 2 or more). For example, SIB1 may inform whether SIBx is broadcast periodically or provided at the request of the UE in an on-demand manner. If SIBx is provided in an on-demand manner, SIB1 may include information necessary for the terminal to perform an SI request. SIB1 is transmitted from the base station to the UE through PDSCH, and the PDCCH scheduling SIB1 may be transmitted through the Type0-PDCCH common search space. SIB1 may be transmitted from the base station to the UE through the PDSCH indicated by the PDCCH.

As an example, the UE may receive system information from the base station through (cell-specific) SIB (system information block)1. As an example, SIB1 may include information used when evaluating whether to allow access to the UE's first cell. Additionally, SIB1 may include radio resource configuration information common to all terminals and barring information applied to integrated access control.

As an example, the first information may include information related to whether or not the first function (or capability)-based UE (e.g., eRedCap UE) is supported(e.g., information indicating whether features related to the first function(or capability)-based UE (e.g., eRedCap UE) are supported, a feature combination including features related to a first function(or capability)-based UE (e.g., an eRedCap UE), information indicating the priority of features related to a first function(or, capability)-based UE (e.g., eRedCap UE) (e.g., "eRedCapPriority-r18"), or/and configuration information of the first function (or capability)-based UE (e.g., eRedCap UE), etc.).

In addition, the first information may include information about whether a specific UE type is supported and/or information related to configuration of an LCID field value and/or information related to a specific UE type, or may be replaced with the above-described information. That is, the UE may include system information including first information related to the type of a specific UE.

Additionally, the system information may include fourth information (e.g., "cellBarredeRedCap-r18") related to whether the first function(or capability)-based UE (e.g., eRedCap UE) may enter the first cell. That is, the fourth information related to whether the first function-based UE (e.g., eRedCap UE) may enter the first cell may indicate that the first function-based UE (e.g., eRedCap UE) may enter the first cell, or may indicate barring of entry into the first cell.

As an example of the present disclosure, based on configuration information related to the first initial BWP for the first function-based UE (e.g., eRedCap UE) being received from the base station, uplink transmission or downlink reception may be performed by the UE through the first initial BWP. And, based on configuration information related to the first initial BWP for the first function-based UE (e.g., eRedCap UE) being not received from the base station, uplink transmission or downlink reception to the UE may be performed through the second initial BWP configured in the first cell.

The UE may receive a random access response (RAR) based on a (physical) random access channel (RACH) preamble from the base station (S720).

And, based on RAR and system information, the UE may transmit a physical uplink shared channel (PUSCH) including a medium access control (MAC) subheader of MAC protocol data unit (PDU) to the base station (S730).

That is, the UE may perform the RACH procedure. As an example, the UE may transmit a (PRACH) preamble to the base station to perform a 4-step based RACH procedure, and the base station may transmit an RAR to the terminal. The UE may transmit PUSCH to the base station based on the UL grant included in the RAR.

As another example, the UE may transmit a (PRACH) preamble and PUSCH as MSG A to the base station to perform a 2-step-based RACH procedure, and the base station may transmit MSG B to the UE in response. That is, when a 2-step based RACH procedure is performed, steps S710 and S720 may be replaced with a step in which the UE transmits a preamble and PUSCH to the base station through MSG A and receives MSG B from the base station.

As an example of the present disclosure, based on whether first information related to the first function-based UE (e.g., enhanced reduced capability (eRedCap) UE) is included in the system information, the first value (or first codepoint) of the LCID field of the MAC subheader (e.g., 0) may be related to second information about the second function-based UE (e.g., non-RedCap UE) or may be related to third information about the first function-based UE (e.g., eRedCap UE).

As an example, based on the first information not being included in the system information, the first value of the LCID field may be related to the second information. And, based on the first information being included in the system information, the first value of the LCID field may be related to the third information. And, the second information is related to the common control channel (CCCH) (64 bits) for the non-RedCap UE, and the third information may be related to the CCCH (48 bits) for the eRedCap UE.

Another example of the present disclosure, based on whether the first information is included in the system information, a second value (or second codepoint) of the LCID field of the MAC subheader (e.g., 1) may be related to fifth information about the eRedCap UE or sixth information about the identity of a logical channel of a dedicated control channel (DCCH) or a dedicated traffic channel (DTCH).

For example, based on the first information being included in the system information, the second value of the LCID field may be related to the fifth information. Based on the first information not being included in the system information, the second value of the LCID field may be related to the sixth information. Here, the fifth information may be related to the CCCH for the eRedCap UE (64 bits).

Another example of the present disclosure, based on whether the first information is included in the system information, the third value of the LCID field of the MAC subheader (or third codepoint)(e.g., 35 or/and 36) may be related to the reserved bit or the seventh information related to the CCCH (of 48 or/and 64 bits) for the third function (or capability)-based UE (e.g., RedCap UE (i.e. R17 RedCap UE)).

As an example, based on the first information being included in the system information, the third value of the LCID field may be related to the reserved bit. And, based on the first information not being included in the system information, the third value of the LCID field may be related to the seventh information.

Meanwhile, based on the first information being included in the system information, a separate field (e.g., LCID extension field) may exist in the MAC subheader to determine information indicated by the LCID field. That is, when the base station transmits (via first information) information indicating an eRedCap UE feature or feature combination to the UE, the LCID extension field may be included in the MAC subheader.

As an example, if first information is included in the system information, the LCID extended field value may be set to 1, and as described above, the LCID field may indicate third information (e.g., when the LCID value is set to the first value), fifth information (e.g., when the LCID value is set to the second value), and reserved bits (e.g., when the LCID value is set to the third value).

And, if the first information is not included in the system information, the LCID extended field value may be set to 0 (i.e., set to a reserved bit), and as described above, the LCID field may indicate second information (e.g., when the LCID value is set to the first value), sixth information (e.g., when the LCID value is set to the second value), and seventh information (e.g., when the LCID value is set to the third value).

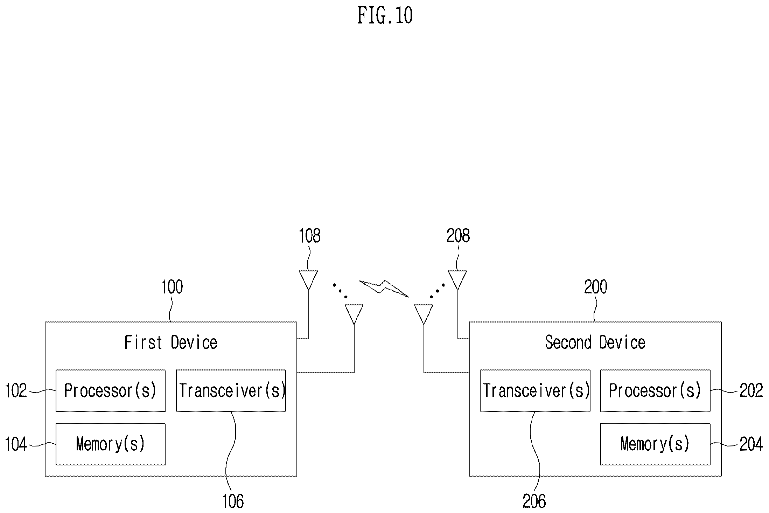

The method described in the example of FIG. 7 may be performed by the first device 100 of FIG. 10. That is, the terminal in FIG. 7 may be implemented as the first device 100. For example, one or more processors 102 of the first device 100 of FIG. 10 may receive system information related to the first cell from a base station through one or more transceivers 106. One or more processors 102 may receive the RAR based on the PRACH preamble from the base station through one or more transceivers 106. Based on the RAR and the system information, one or more processors 102 may transmit a PUSCH including a MAC subheader of the MAC PDU to the base station through one or more transceivers 106.

Furthermore, one or more memories 104 of the first device 100 may store instructions for performing the method described in the example of FIG. 7 or the examples described below when executed by one or more processors 102.

FIG. 8 is a diagram illustrating a process in which a second terminal performs communication according to an embodiment of the present disclosure.

The base station may transmit system information related to the first cell to the terminal (S810).

As described above, the first information included in the system information may include information related to whether or not the eRedCap UE is supported (e.g., information indicating whether features related to the eRedCap UE are supported, a feature combination including features related to the eRedCap UE, information indicating the priority of features associated with the eRedCap UE (e.g., "eRedCapPriority-r18"), configuration information of eRedCap UE etc.).

The base station may transmit RAR based on the (P)RACH preamble to the UE (S820). And, the base station may receive a PUSCH including the MAC subheader of the MAC PDU based on the RAR and system information from the UE (S830).

The LCID field of the MAC subheader included in the PUSCH has been described with reference to FIG. 7, so redundant description will be omitted.

The method described in the example of FIG. 8 may be performed by the second device 200 of FIG. 10. That is, the base station in FIG. 8 may be implemented as the second device 200. For example, one or more processors 202 of the second device 200 of FIG. 10 may transmit system information related to the first cell to the UE through one or more transceivers 206. One or more processors 202 may transmit an RAR based on the PRACH preamble to the terminal through one or more transceivers 206. One or more processors 202 may receive a PUSCH including a MAC subheader of a MAC PDU from the terminal through one or more transceivers 106, based on the RAR and the system information.

Furthermore, one or more memories 204 of the second device 200 may store instructions for performing the method described in the example of FIG. 8 or the examples described below when executed by one or more processors 202.

Hereinafter, the initial connection procedure based on the operations described in FIGS. 7 and 8 will be described in detail.

Embodiment 1

Embodiment 1 relates to the initial connection procedure of the (e)RedCap UE. A UE in RRC_IDLE or RRC_INACTIVE state may configure and activate one initial BWP and perform the initial access procedure through the initial BWP in the activated state.

The base station may allocate a PDSCH after dividing the initial BWP for a general UE (i.e., non-RedCap UE) or the initial BWP for an R17 RedCap UE into N 5 MHz BWPs for an R18 RedCap UE. For example, if the R18 RedCap UE may receive a PDSCH through a bandwidth of up to 5 MHz, the 20 MHz initial BWP may be divided into N 5 MHz sub-BWPs. And, for system information transmission or/and paging transmission, the base station may transmit Rel-18 PDSCH to the R18 RedCap UE through one or more specific 5 MHz sub-BWPs constituting the 20 MHz initial BWP.

A UE in RRC_IDLE or RRC_INACTIVE state may switch to RRC_Connected mode through the initial connection procedure. As another example, when an RRC re-establishment procedure is performed through radio link failure (RLF), etc., the UE may perform an initial access procedure. As another example, the UE may perform an initial access procedure to the target cell through a mobility procedure such as handover.

When performing the random access channel (RACH) procedure for the initial access procedure described above, the UE may first select the initial DL/UL BWP and then transmit MSG (message) 1 including the PRACH preamble to the base station. The UE may receive MSG (message) 2 including a random access response (RAR) corresponding to the PRACH preamble from the base station, and may transmit MSG 3 PUSCH to the base station based on MSG 2. Accordingly, the UE may receive MSG 4 PDCCH/PDSCH from the base station.

The above-described example is a 4-step based RACH procedure, and the UE may also perform a 2-step based RACH procedure. For example, the UE may transmit MSG A preamble and MSG A PUSCH to the base station, and the base station may transmit MSG B DCI and MAC CE to the UE.

Here, a separate initial BWP that is different from existing UEs may be configured for the R18 RedCap UE. That is, the R18 RedCap UE may select the initial BWP for the R18 RedCap UE. If there is no separate initial BWP for the R18 RedCap UE, the R18 RedCap UE may select the initial BWP for the R17 RedCap UE. If there is no initial BWP for the R17/18 RedCap UE, the R18 RedCap UE may select the initial BWP for the general UE.

As an example of the present disclosure, when the 4-step based RACH procedure is triggered, the UE may transmit the MSG 1 PRACH preamble to the base station and receive MSG 2 DCI and RAR MAC CE from the base station. Additionally, the UE may receive MSG 3 PUSCH from the base station based on the UL grant included in the RAR MAC CE. Here, MSG 3 PUSCH may include a medium access control (MAC) protocol data unit (PDU), and the MAC PDU may include a MAC header including an LCID and a MAC payload including a common control channel (CCCH) message.

As another example of the present disclosure, when the 2-step based RACH procedure is triggered, the UE may transmit MSG A PRACH preamble and MSG A PUSCH to the base station and receive MSG B DCI and MAC CE from the base station. Here, the MSG A PUSCH may include a MAC PDU, and the MAC PDU may include a MAC header including an LCID and a MAC payload including a CCCH message.

In a basic wireless communication system, the LCID value may be set as shown in Table 6, and some code points/indexes are reserved. In Table 6, "except RedCap UE" may mean a general UE (i.e., non-RedCap UE).

[Table 6]

| Codepoint /Index | LCID value |
|---|---|
| 0 | CCCH of size 64 bits (referred to as "CCCH1"), except for a RedCap UE |
| 1-32 | Identity of the logical channel of DCCH and DTCH |
| 33 | Extended logical channel ID field (two-octet eLCID field) |
| 34 | Extended logical channel ID field (one-octet eLCID field) |
| 35 | CCCH of size 48 bits (referred to as "CCCH") for a RedCap UE |

(continued)

| Codepoint /Index | LCID value |
|---|---|
| 36 | CCCH of size 64 bits (referred to as "CCCH") for a RedCap UE |
| 37-42 | Reserved |
| 43 | Truncated Enhanced BFR (one octet $C_i$) |
| 44 | Timing Advance Report |
| 45 | Truncated Sidelink BSR |
| 46 | Sidelink BSR |
| 47 | Reserved |
| 48 | LBT failure (4 octets) |
| 49 | LBT failure (1 octet) |
| 50 | BFR (1 octet $C_i$) |
| 51 | Truncated BFR (one octet $C_i$) |
| 52 | CCCH of size 48 bits (referred to as "CCCH"), except for a RedCap UE |
| 53 | Recommended bit rate query |
| 54 | Multiple Entry PHR (4 octets $C_i$) |
| 55 | Configured Grant Confirmation) |
| 56 | Multiple Entry PHR (1 octet Ci) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

To support RedCap (e)UEs, etc., when UE capability or UE type is indicated by the LCID of the MAC PDU transmitted by MSG 3 or MSG B PUSCH, there is a problem that it is difficult to support various types of terminals through existing LCID.

Embodiment 2

Embodiment 2 relates to a method of configuring all or specific LCID code points/indexes differently for each cell. That is, as information corresponding to the codepoint/index of all or specific LCIDs is set differently for each cell, information related to various types of UEs may be indicated through the LCID field.

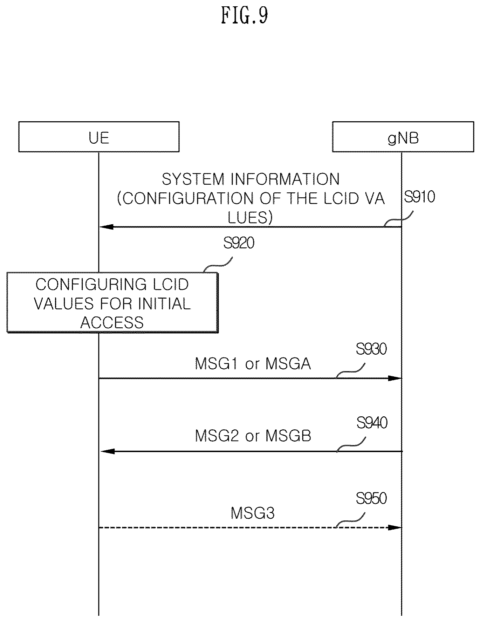

As an example of the present disclosure, as shown in FIG. 9, the base station may transmit system information or/and UE-specific RRC message to the UE (S910).

The meaning of the specific LCID value(s) of the MAC PDU transmitted by RACH MSG 3 or MSG A PUSCH may be configured/specified through system information or/and UE-specific RRC message. That is, the UE may receive system information or/and UE-specific RRC message from the base station, and configure/specify the meaning of the specific LCID value(s) of the MAC PDU transmitted by RACH MSG 3 or MSG A PUSCH based on system information or/and UE-specific RRC message (S920).

And, the UE may perform the RACH procedure as described above. As an example, the UE may transmit a random access preamble as MSG 1 or MSG A to the base station (S930).

Specifically, random access preamble sequences having two different lengths may be supported. The long sequence length 839 may be applied for subcarrier spacings of 1.25 and 5 kHz, and the short sequence length 139 can be applied for subcarrier spacings of 15, 30, 60, and 120 kHz.

Multiple preamble formats may be defined by one or more RACH OFDM symbols and different cyclic prefixes (and/or guard times). RACH configuration for a cell may be included in the cell's system information and provided to the UE. The RACH configuration may include information about PRACH subcarrier spacing, available preambles, preamble format, etc. The RACH configuration may include association information between SSBs and RACH (time-frequency) resources. The UE may transmit a random access preamble on the RACH time-frequency resource associated with the detected or selected SSB.

The threshold of SSB for RACH resource association may be configured by the network, and transmission or retransmission of the RACH preamble may be performed based on the SSB where the reference signal received power (RSRP) measured based on SSB satisfies the threshold. For example, the UE may select one of the SSB(s) that meets the threshold and transmit or retransmit the RACH preamble based on the RACH resource associated with the selected SSB.

The UE may receive MSG 2 or MSG B from the base station (S940). The PDCCH scheduling the PDSCH carrying the RAR may be CRC masked with a random access (RA) radio network temporary identifier (RNTI) (RA-RNTI) and transmitted from the base station to the UE. The UE that detects the PDCCH masked with RA-RNTI may receive RAR from the PDSCH scheduled by the DCI carrying the PDCCH.

The UE may check whether the preamble it transmitted, that is, random access response information for MSG 1, is within the RAR. Whether random access information for MSG 1 transmitted by the UE exists may be determined by whether a random access preamble ID exists for the preamble transmitted by the UE. If there is no response to MSG 1, the UE may retransmit the RACH preamble within a predetermined number of times while performing power ramping. The UE may calculate the PRACH transmission power for retransmission of the preamble based on the most recent path loss and power ramping counter.

Thereafter, the UE may transmit MSG 3 PUSCH to the base station based on random access response information (e.g., UL grant included in the information) (S950).

The PUSCH transmitted by the UE may include a MAC PDU, and as described above, some of the LCID field codepoint/index values of the MAC PDU may be configured/specified through system information or/and UE-specific RRC message.

As an example, in Table 6, codepoint/index values 37 to 42 may be configured/defined as configurable values. Additionally, the base station may configure/designate a specific LCID value among configurable LCID values through system information or/and a UE-specific RRC message as a value for indicating a specific UE type.

As an example of the present disclosure, the base station may configure/specify that the LCID value configured/defined to 37 indicates the R18 RedCap UE of option BW 1 through system information or UE-specific RRC message. The base station may configure/specify that the LCID value set/defined to 38 indicates the R18 RedCap terminal of option BW 2 through system information or UE-specific RRC message. The base station may configure/specify that the LCID value configured/defined to 39 indicates the R18 RedCap UE of option BW 3 through system information or UE-specific RRC message. The base station may configure/specify that the LCID value set/defined to 40 indicates UE capability supporting relaxed UE processing through system information or UE-specific RRC messages.

Here, the remaining LCID values 41 to 42 not configured by the base station may be reserved. Accordingly, the MSG3/MSGB MAP PDU with LCID 37 to 40 values for which the base station configures specific information/description/meaning may be processed as a valid MAC PDU. Additionally, the MSG3/MSGB MAP PDU with LCID values 41 to 42 may be treated as an invalid MAC PDU and discarded by the corresponding base station.

However, this is only one embodiment, and the LCID value for which the base station configures specific information/description/meaning through system information or UE-specific RRC message may be configured differently. That is, each of the R18 RedCap UEs with option BW 1/2/3 and UE capabilities supporting relaxed UE processing may be configured/designated to one of the LCID values of 37 to 42.

The base station may differently configure information corresponding to the above-described LCID value through system information or UE-specific RRC messages for each specific cell/BWP/TRP/RACH resource set/specific RS set(s) (e.g., a specific SSB index or CSI-RS resource). As another example, the base station may configure information corresponding to the above-described LCID value differently for each 2-step based RACH procedure or 4-step based RACH procedure.

As an example, in the case of the first cell, the R18 RedCap UE of option BW 1 may be configured/designated to be indicated by the LCID field configured to a specific value through the base station's system information or UE-specific message. And, in the case of the second cell, information other than the R18 RedCap UE of option BW 1 may be indicated by the LCID field set to a specific value through the base station's system information or UE-specific message.

As another example, when a UE performs 4-step based RACH for a specific cell or a specific BWP, the LCID value of the MSG3 MAC PDU may indicate the type of the corresponding UE depending on the settings of the base station.

As an example, assume that the UE in question is an R18 RedCap UE with option BW 1. An LCID value set to 37 in a specific cell may be configured to indicate an R18 RedCap UE of option BW 1 through system information or UE-specific RRC messages transmitted by the base station. Accordingly, the UE may set the value of the LCID field to 37 and transmit the MSG3 MAC PDU including the LCID field to the base station. Since the same LCID value may be used or reserved for a different meaning for a specific cell or specific BWP, if the UE moves a cell or switches BWP to perform BWP, a different LCID value may correspond to the R18 RedCap UE of option BW 1 depending on the base station configurations.

As an example of the present disclosure, a specific cell may not support a specific terminal type, but another cell may support a specific UE type.

For example, in a cell that does not support UE capabilities for relaxed UE processing, the LCID value corresponding to relaxed UE processing may not be set. However, in a cell that supports UE capability for relaxed UE processing, an LCID value corresponding to relaxed UE processing may be set. Here, a UE with UE capabilities for relaxed UE processing may not access a cell that does not support UE capabilities for relaxed UE processing. As another example, the UE may transmit RACH MSG3 or MSGA PUSCH containing a different LCID value (rather than the LCID value related to relaxed UE processing) to the base station.

Embodiment 2-1

Embodiment 2-1 relates to an Embodiment in which an LCID value set to a specific value indicates different information depending on whether information related to the (e)RedCap UE is included in the base station's system information or UE-specific message.

Here, the information related to the (e)RedCap terminal included in the system information or UE-specific message may include at least one of information indicating that (e)RedCap UEs are supported, configuration information related to (e)RedCap UE, information indicating the priority of features for (e)RedCap UEs, or information about the feature combination preamble including features for the (e)RedCap UE.

As an example of the present disclosure, when information related to the (e)RedCap UE is included in the system information or UE-specific message, the LCID field set to a specific value may indicate a (e)RedCap UE as the type of UE or a CCCH for the (e)RedCap UE. The fact that the LCID field indicates the CCCH for the (e)RedCap UE may mean that the (e)RedCap UE transmitting the MAC PDU including the LCID field transmits the CCCH. As another example, if information related to the (e)RedCap UE is not included in the system information or UE-specific message, the LCID field set to a specific value may indicate other information.

Here, if information related to the (e)RedCap UE is included in the system information or UE-specific message, the MAC subheader included in the MAC PDU may include a separate field (e.g., LCID extension field) that may determine information indicated by the LCID value set to a specific value.

As an example, if information related to the (e)RedCap UE is included in the system information or UE-specific message (i.e., if the base station indicates information/operations/features, etc. related to the (e)RedCap UE), the LCID extension field value may be set to 1 (or 0), and the LCID field set to a specific value may indicate information related to the (e)RedCap UE. If information related to the (e)RedCap UE is not included in the system information or UE-specific message, the LCID extension field value may be set to 0 (or 1), and the LCID field set to a specific value may indicate other information (e.g., information related to a non-RedCap UE, etc.).

Through the above-described embodiments, when the type or capability of the terminal is indicated through the LCID field during initial connection, the problem of the required LCID value being unnecessarily increased and the problem of the size of the MSG3 or MSGA MAC PDU being increased through an additional LCID field can be resolved.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

receiving system information related to a first cell from a base station;
receiving a random access response (RAR) based on a random access channel (RACH) preamble from the base station; and
based on the RAR and the system information, transmitting a physical uplink shared channel (PUSCH) including a medium access control (MAC) subheader of a MAC protocol data unit (PDU) to the base station,
wherein based on whether the system information includes first information related to a first function-based UE, a first value of a logical channel identifier (LCID) field of the MAC subheader is related to second information about a second function-based UE or is related to third information about a first function-based UE.

2. The method of claim 1, wherein:

based on the first information not being included in the system information, a first value of the LCID field is related to the second information, and
based on the first information being included in the system information, a first value of the LCID field is related to the third information.

3. The method of claim 2, wherein:

the second information is related to a common control channel (CCCH) for the second function-based UE, and
the third information is related to a CCCH for the first function-based UE.

4. The method of claim 1, wherein:

the first information includes information related to whether the first function-based UE is supported, and
the system information includes fourth information related to whether the first function-based UE can enter the first cell.

5. The method of claim 1, wherein:
based on whether first information is included in the system information, a second value of the LCID field of the MAC subheader is related to fifth information about the first function-based UE or sixth information about an identity of a logical channel of a dedicated control channel (DCCH) or a dedicated traffic channel (DTCH).

6. The method of claim 5, wherein:

based on the first information being included in the system information, a second value of the LCID field is related to the fifth information, and
based on the system information not including the first information, a second value of the LCID field is related to the sixth information.

7. The method of claim 5, wherein:
based on whether the first information is included in the system information, a third value of the LCID field of the MAC subheader is related to a reserved bit or seventh information related to a CCCH for a third function UE.

8. The method of claim 7, wherein:

based on the first information being included in the system information, a third value of the LCID field is related to a reserved bit, and

based on the first information not being included in the system information, a third value of the LCID field is related to the seventh information.

9. The method of claim 1, wherein:
the UE is a first function-based UE that supports 5 MHz bandwidth part (BWP).

10. The method of claim 9, wherein:

based on configuration information related to a first initial BWP for the first function-based UE being received from the base station, uplink transmission or downlink reception is performed through the first initial BWP, and based on the configuration information related to the first initial BWP for the first function-based UE being not received from the base station, uplink transmission or downlink reception is performed through a second initial BWP configured in the first cell.

11. The method of claim 1, wherein:
the first function includes a reduced function than the second function.

12. A user equipment (UE) in a wireless communication system, the UE comprising:

at least one transceiver; and
at least one processor coupled to the at least one transceiver;
wherein the at least one processor is configured to:

receive, through the at least one transceiver, system information related to a first cell from a base station;
receive, through the at least one transceiver, a random access response (RAR) based on a random access channel (RACH) preamble from the base station; and
based on the RAR and the system information, transmit, through the at least one transceiver, a physical uplink shared channel (PUSCH) including a medium access control (MAC) subheader of a MAC protocol data unit (PDU) to the base station,
wherein based on whether the system information includes first information related to a first function-based UE, a first value of a logical channel identifier (LCID) field of the MAC subheader is related to second information about a second function-based UE or is related to third information about a first function-based UE.

13. A method performed by a base station in a wireless communication system, the method comprising:

transmitting system information related to a first cell to a user equipment (UE);
transmitting a random access response (RAR) based on a random access channel (RACH) preamble to the UE; and
based on the RAR and the system information, receiving a physical uplink shared channel (PUSCH) including a medium access control (MAC) subheader of a MAC protocol data unit (PDU) from the UE,
wherein based on whether the system information includes first information related to a first function-based UE, a first value of a logical channel identifier (LCID) field of the MAC subheader is related to second information about a second function-based UE or is related to third information about a first function-based UE.

14. A base station in a wireless communication system, the base station comprising:

at least one transceiver; and
at least one processor coupled to the at least one transceiver;
wherein the at least one processor is configured to:

transmit, through the at least one transceiver, system information related to a first cell to a user equipment (UE);
transmit, through the at least one transceiver, a random access response (RAR) based on a random access channel (RACH) preamble to the UE; and
based on the RAR and the system information, receive, through the at least one transceiver, a physical uplink shared channel (PUSCH) including a medium access control (MAC) subheader of a MAC protocol data unit (PDU) from the UE,

wherein based on whether the system information includes first information related to a first function-based UE, a first value of a logical channel identifier (LCID) field of the MAC subheader is related to second information about a second function-based UE or is related to third information about a first function-based UE.

15. A processing device configured to control a user equipment (UE) to perform communication in a wireless communication system, the processing device comprising:

at least one processor; and
at least one computer memory operatively coupled to the at least one processor and storing instructions for performing operations upon being executed by the at least one processor,
wherein the operations comprise:

receiving system information related to a first cell from a base station;
receiving a random access response (RAR) based on a random access channel (RACH) preamble from the base station; and
based on the RAR and the system information, transmitting a physical uplink shared channel (PUSCH) including a medium access control (MAC) subheader of a MAC protocol data unit (PDU) to the base station, wherein based on whether the system information includes first information related to a first function-based UE, a first value of a logical channel identifier (LCID) field of the MAC subheader is related to second information about a second function-based UE or is related to third information about a first function-based UE.

16. At least one non-transitory computer readable medium storing at least one instruction, wherein:
the at least one instruction executed by at least one processor controls a device to perform communication in a wireless communication system to perform:

receiving system information related to a first cell from a base station;
receiving a random access response (RAR) based on a random access channel (RACH) preamble from the base station; and
based on the RAR and the system information, transmitting a physical uplink shared channel (PUSCH) including a medium access control (MAC) subheader of a MAC protocol data unit (PDU) to the base station,
wherein based on whether the system information includes first information related to a first function-based UE, a first value of a logical channel identifier (LCID) field of the MAC subheader is related to second information about a second function-based UE or is related to third information about a first function-based UE.

FIG.1

FIG.2

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$　　$l = 14 \cdot 2^{\mu} - 1$

# FIG.4

# FIG.5

FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601        S602        S603        S604        S605        S606        S607        S608

· DL/UL ACK/NACK
· UE CQI/PMI RI REPORT
  USING PUSCH AND PUCCH

FIG.7

RECEIVING SYSTEM
INFORMATION RELATED TO
THE FIRST CELL FROM THE
BASE STATION — S710

↓

RECEIVING A RAR BASED
ON A RACH PREAMBLE
FROM THE BASE STATION — S720

↓

TRANSMITTING A PUSCH
INCLUDING A MAC
SUBHEADER OF MAC PDU
TO THE BASE STATION — S730

FIG.8

TRANSMITTING SYSTEM
INFORMATION RELATED TO
THE FIRST CELL TO THE UE — S810

↓

TRANSMITTING A RAR
BASED ON A RACH
PREAMBLE TO THE UE — S820

↓

RECEIVING A PUSCH
INCLUDING A MAC
SUBHEADER OF MAC PDU
FROM THE UE — S830

# FIG.9

SYSTEM INFORMATION
(CONFIGURATION OF THE LCID VA
LUES)

S910

S920

CONFIGURING LCID
VALUES FOR INITIAL
ACCESS

MSG1 or MSGA

S930

MSG2 or MSGB

S940

MSG3

S950

EP 4 694 358 A1

FIG.10

## INTERNATIONAL SEARCH REPORT

| | International application No. |
|---|---|
| | **PCT/KR2024/004506** |

### A. CLASSIFICATION OF SUBJECT MATTER

**H04W 48/08**(2009.01)i; **H04W 74/00**(2009.01)i; **H04W 76/11**(2018.01)i; **H04W 4/70**(2018.01)i; **H04W 88/02**(2009.01)i

According to International Patent Classification (IPC) or to both national classification and IPC

### B. FIELDS SEARCHED

Minimum documentation searched (classification system followed by classification symbols)

H04W 48/08(2009.01); H04W 28/02(2009.01); H04W 28/16(2009.01); H04W 48/02(2009.01); H04W 48/10(2009.01); H04W 68/00(2009.01); H04W 72/04(2009.01); H04W 72/12(2009.01); H04W 72/14(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시스템 정보(system information), 랜덤 액세스 응답(random access response: RAR), 서브헤더(subheader), 논리 채널 식별자(logical channel identifier: LCID), 단말(user equipment: UE), 물리 상향링크 공유 채널(physical uplink shared channel: PUSCH), 타입(type), 성능저감단말(reduced capability UE: Redcap UE)

### C. DOCUMENTS CONSIDERED TO BE RELEVANT

| Category* | Citation of document, with indication, where appropriate, of the relevant passages | Relevant to claim No. |
|---|---|---|
| X | WO 2022-077488 A1 (JRD COMMUNICATION (SHENZHEN) LTD.) 21 April 2022 (2022-04-21)<br>See paragraphs [0048]-[0049], [0088], [0144], [0146], [0159]-[0160], [0176], [0180] and [0195]-[0196]; table 2; claim 2; and figure 12. | 1-7,12-16 |
| Y | | 8-11 |
| Y | KR 10-2023-0010623 A (LG ELECTRONICS INC.) 19 January 2023 (2023-01-19)<br>See paragraphs [0099] and [0102]; and claim 1. | 8-11 |
| A | EP 3434056 B1 (INTEL CORPORATION) 18 November 2020 (2020-11-18)<br>See paragraphs [0024]-[0026]; and claims 1-8. | 1-16 |
| A | WO 2020-068940 A1 (INTEL CORPORATION) 02 April 2020 (2020-04-02)<br>See claims 1-16. | 1-16 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/004506** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2022-086174 A1 (LG ELECTRONICS INC.) 28 April 2022 (2022-04-28)<br>    See claims 1-10. | 1-16 |

Form PCT/ISA/210 (second sheet) (July 2022)

**INTERNATIONAL SEARCH REPORT**
Information on patent family members

International application No.

**PCT/KR2024/004506**

| Patent document cited in search report | | | Publication date (day/month/year) | Patent family member(s) | | | Publication date (day/month/year) |
|---|---|---|---|---|---|---|---|
| WO | 2022-077488 | A1 | 21 April 2022 | CN | 116391395 | A | 04 July 2023 |
| | | | | EP | 4229888 | A1 | 23 August 2023 |
| | | | | US | 2023-0422296 | A1 | 28 December 2023 |
| KR | 10-2023-0010623 | A | 19 January 2023 | US | 2023-0180110 | A1 | 08 June 2023 |
| | | | | WO | 2021-230726 | A1 | 18 November 2021 |
| EP | 3434056 | B1 | 18 November 2020 | EP | 3434056 | A1 | 30 January 2019 |
| | | | | WO | 2017-164907 | A1 | 28 September 2017 |
| WO | 2020-068940 | A1 | 02 April 2020 | CN | 112789929 | A | 11 May 2021 |
| | | | | EP | 3858061 | A1 | 04 August 2021 |
| | | | | US | 11463938 | B2 | 04 October 2022 |
| | | | | US | 11770752 | B2 | 26 September 2023 |
| | | | | US | 2022-0053408 | A1 | 17 February 2022 |
| | | | | US | 2023-0087582 | A1 | 23 March 2023 |
| WO | 2022-086174 | A1 | 28 April 2022 | KR | 10-2023-0092868 | A | 26 June 2023 |
| | | | | US | 2023-0300789 | A1 | 21 September 2023 |

Form PCT/ISA/210 (patent family annex) (July 2022)